# EUROPEAN PATENT APPLICATION

(11) **EP 2 333 746 A1**
(43) Date of publication of application: **15.06.2011**
(21) Application number: 09425498.4
(22) Date of filing: 04.12.2009
(51) Int. Cl.: G09B 7/073

(54) **System and process for evaluating, updating and certifying students' learning**

(71) Applicant: D.R.E.A.M. Italia S.c.a.f., 52015 Pratovecchio (AR) (IT)
(72) Inventor: Ottaviani, Claudio, 52015 Pratovecchio (AR) (IT)
(74) Representative: Garavelli, Paolo

(57) **Abstract**

A system and its related process are described, for evaluating, updating and certifying the formation of learners; the process comprises the steps of: providing courses composed of lessons, classified by subject, topic and level of depth, which are prepared in the form of film clips with multimedia content and are managed using an information support; for the various subject or topics, depending on the specific contents and the training needs, providing up to three levels of lesson (base, advanced and specialist), in addition to extension classes; using the lessons indicated in the list that is prepared on the basis of the results of the evaluation of the learners' initial knowledge and preliminarily-set parameters; during the course, continuously evaluating, after each lesson, the learners' learning and interest, in order both to keep the level of attention and participation high and to adjust course development and contents on the basis of this evaluation; after each lesson and based on the learning and interest results, possibly repeating the same lesson or hold an extension class, if available, before passing to the next planned lesson, the list of lessons effectively given, including any extensions and repetitions, being recorded and constituting the basis for certification of the topics dealt with in the course; for the purposes of objective evaluation of learning, providing intermediate tests and a final exam, the results of which are saved for certifying the course attendance and learning of each learner; adjusting course contents to the learners' knowledge in real time, following the preliminary evaluation of this knowledge at the beginning of the course, and to the methodology of the process, the process, based on the results achieved and according to the parameters set, automatically choosing the filmed lessons with multimedia content having the level most suited to the preparation of the learners; and depending on the characteristics of the subject dealt with and the target audience to which the training activity is addressed, providing a development of the teaching levels.

## Description

The present invention refers to a system and a process for evaluating, updating and certifying the formation of learners.

Patent EP-A-0 814 257, which is considered the most relevant prior art, discloses a system and a process to be applied in multimedia formation.

The above-mentioned patent is related to an *"Automatic training and control system for learning by means of real-time analysis of answers to questionnaires"* that originated on the grounds that training courses given in the traditional manner do not allow effective results to be achieved when in one or more of the following conditions:
➢ Large number of learners
➢ Differences in the cultural levels of learners
➢ Geographic location of where course is given is a far away from where qualified teachers usually work
➢ Courses of long duration

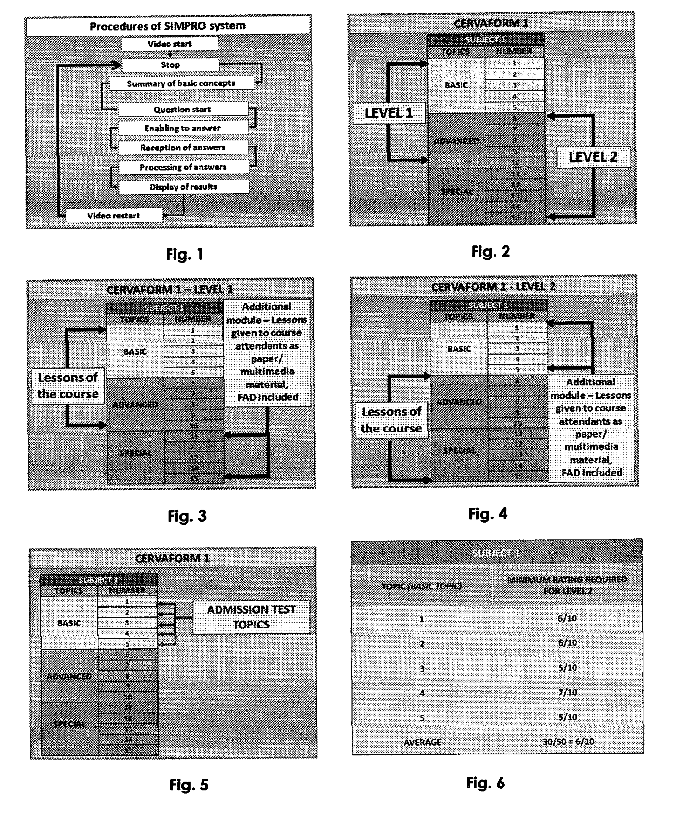

Such patent makes use of hardware supports, electronic grading and audiovisual means of reproduction, and is organized to (see Figure 1):
➢ Start the audiovisual means of reproduction to send a sequence of training messages
➢ Stop said means of reproduction at the end of said messages
➢ Start said audiovisual means of reproduction to communicate a question in combination with a series of possible answers
➢ Enable the terminal stations for selection of the correct answer to the given question
➢ Receive the answers sent from the terminal stations
➢ Process these answers
➢ Display the results of the answers, so as to allow immediate verification of the achieved level of learning
➢ Restart said audiovisual means of reproduction to send a new sequence of training messages, cyclically repeating the above-described operations.

The shortcomings of the above-described system are that it is not provided for:
**1.** Responding to the need for training large groups, also with very different cultural levels, with:
   ■ Preliminary evaluation of the learners' level of knowledge
   ■ Selection of groups based on the level of knowledge
   ■ Personalization of the training project, or adjustment of the contents of individual courses, based on the preliminary evaluation of the learners' level of knowledge.
**2.** A procedure for storing the training path and the learning indexes of every learner for the purposes of final certification of attendance and learning level.
**3.**Active participation of the learners in the evaluation of learning (self-assessment), rather than just evaluation through answers to multiple-choice questions/questionnaires.
**4.** Active participation of the learners through the expression of specific professional interest for the subjects/topics dealt with.
**5.** *In itinere* adjustment of course in relation to the learning level and specific interests of the learners for individual subjects or topics.

Object of the present invention is solving the above prior art problems, by providing a system and a process for evaluating, updating and certifying the formation that allow solving the following problems:
- managing courses in non-homogeneous classes regarding provenience and cultural and professional preparation of learners;
- adapting the level of courses depending on the knowledge of learners to obtain the maximum formation differential in every class/learner;
- participation of learners in the making of the formation route to take into account the actual professional interests of every class/learner;
- certifying on an objective basis the actually performed formation route and the obtained learning results.

The inventive system and process have been developed along four main lines of work for searching for new teaching systems have been identified:
1) Adopting preliminary learner-knowledge evaluation systems for one or more of the following purposes:
   ➢ Selecting highly homogeneous learner groups
   ➢ Personalization of training projects
   ➢ Working out methods for the real-time adjustment of the contents of each single course
2) Studying methods that allow learner participation in constructing the educational path with continuous verification of learning via self-assessment (without the use of questionnaires) and the possibility of expressing the level of professional interest for the various subjects and topics dealt with.
3) Working out *in itinere* course adjustment methods based on the learning level and interests of the learners.
4) Adopting systems and methods that ensure the objective and documented certification of the attendance and learning level of the learners.

As shall be better seen further on, the elements of originality of the inventive system and process are:
➢ adjustment of the course programme and contents in real time, whether in the initial phase or during the running of the course, with reference to the initial knowledge, the learning capabilities and the specific interests of the learners
➢ maintaining a high level of attention and satisfaction amongst the learners through their continuous participation in constructing the training path
➢ certification, intended for the client and the learner, that is objective, analytic and documented regarding the running of the training activity, its effective contents and the learning results.

Optionally, the inventive system and process provide a preliminary evaluation of the basic level of knowledge of potential learners, in order to select homogeneous groups and/or to personalize the training project to reduce the difference in the levels of knowledge of the learner population that will undertake the training activity or to differentiate the training activity itself.

Finally, it is possible to use the inventive system and process for application for training with the remote, so called e-learning, method.

The above and other objects and advantages of the invention, as will appear from the following description, are obtained with a system and a process as claimed in the respective independent claims.

Preferred embodiments and non-trivial variations of the present invention are the subject matter of the dependent claims.

The present invention will be better described by some preferred embodiments thereof, provided as a non-limiting example, with reference to the enclosed drawings, in which:

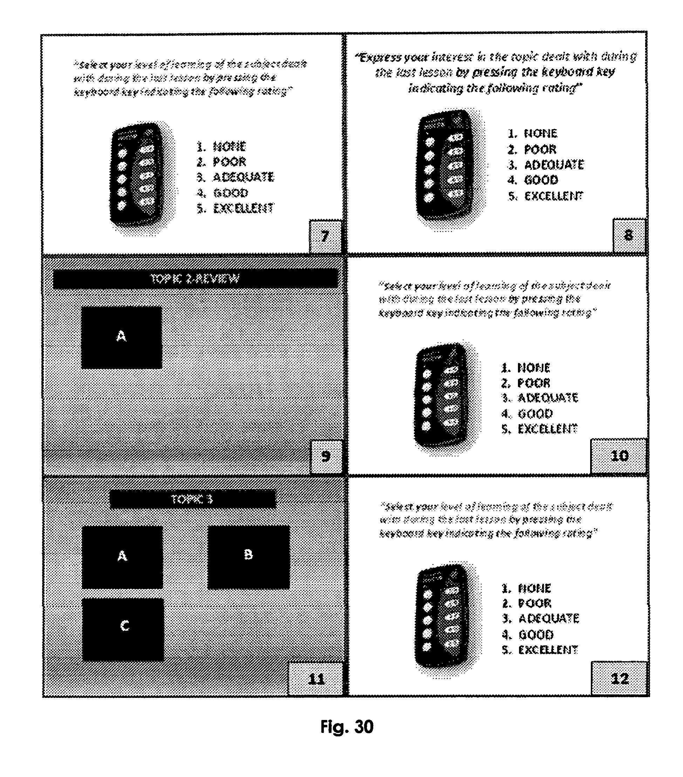

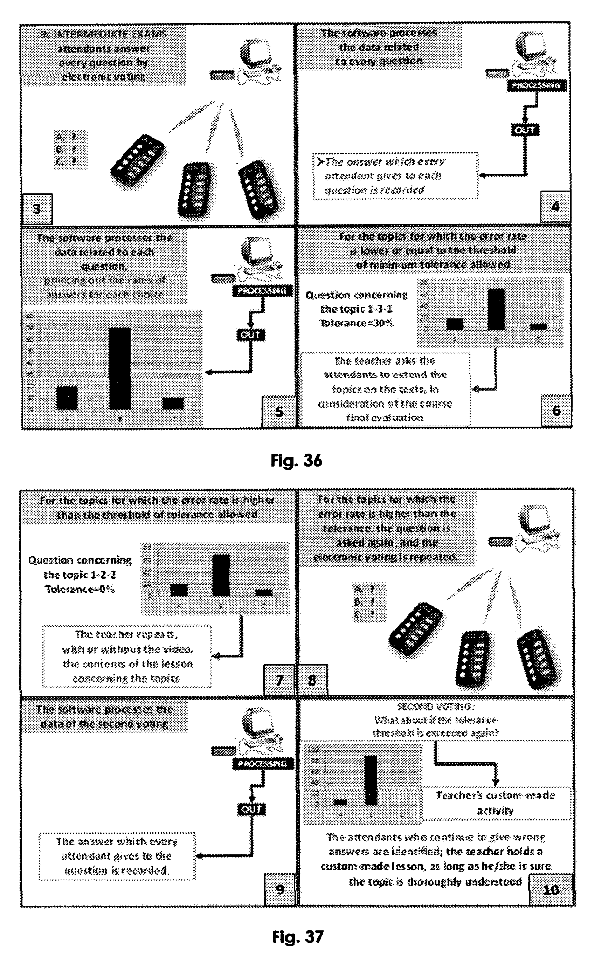

- Figures 1 to 61 are schematic views of the steps of the inventive process and of the architecture of the inventive system, in addition to specific application examples.

With reference to the Figures, the system of the invention is an automatic system for adjusting the contents of educational and training courses to the initial knowledge of the learners, their learning capabilities and their specific professional interests.

The inventive system and process deal with a teaching system conceived for applications in the field of education, training and professional updating, with the objective of achieving maximum educational gain through the automatic adjustment of course contents based on the evaluation of the learners' initial knowledge and the continuous monitoring of both the learning level and interest in the individual topics.

In particular, the system's design and interactive management methods permit the learners' level of attention to be constantly kept high and to always make them feel participant in constructing the educational path.

The inventive system and process are intended for the education/training of personnel, both for introduction to new operational areas and for assignment to new duties within the same operational area.

The inventive system and process are particularly suitable for managing periodic or special refresher courses for personnel already assigned to certain roles or duties. In fact, the system develops precisely the specific levels of knowledge and interest of the individual groups of persons, avoiding pointless and boring repetition of already-known concepts and concentrating the extension classes on topics of more immediate interest.

In addition, the inventive system and process ensure a continuous and precise evaluation of learning with methods of learner participation and self-assessment, without prejudice to carrying out the intermediate and final evaluation tests on an objective basis. The continuous, intermediate and final evaluation methods ensure both the correct sequentiality and progression in the development of individual subjects and topics and support for the objective certification of education/training results through the recording of all the data of every learner's training path and not just of the final exam.

In particular, this structuring is designed to make the inventive system and process (here sometimes called "CERVAFORM") the most suitable tool for managing educational and training courses concerning safety in the workplace.

Briefly put, the inventive system and process are based on the following principles and methods:
➢ real-time adjustment of the lesson plan, at the beginning of the course, by selection of the most suitable level of depth for each subject or topic based on the evaluation of the learners' knowledge.
➢ Continuous control of learning and level of interest, favouring the keeping of a high level of attention with methods based on active participation and making the learners aware of their responsibilities in constructing the educational path.
➢ Progressive and continuous adjustment of the course, based on the learning level and the specific professional interest shown by the learners for individual topics.
➢ Utilization of intermediate and final tests for the objective verification of learning.
➢ objective and documented certification of course attendance, the subjects and topics effectively dealt with and the learning level achieved.

The inventive system is composed of:
➢ Lessons planned and recorded as film clips with multimedia content (lasting approximately five minutes) organized in several levels of depth for each subject or topic.
➢ Sets of multiple-choice questions regarding the subjects and topics of the entrance test, to be given at the beginning of the course to evaluate the learners' knowledge.
➢ System for setting the minimum grading levels to be reached for access to the various programmable lesson levels of the course.
➢ System for setting the minimum learning levels to be reached in the various subjects/topics for passing each step of continuous evaluation.
➢ System for setting the minimum interest levels to be reached in the various subjects/topics for admission to the extension classes at each step of continuous evaluation.
➢ Set of multiple-choice questions regarding all subjects/topics for the objective evaluation of *in itinere* learning by means of intermediate exams.
➢ System for random identification of multiple-choice questions, in a preset percentage of those in the set of intermediate exams, for giving the final exam
➢ Computer.
➢ Video projector for computers.
➢ Audio amplification system for computers.
➢ Electronic grading system equipped with 50 keyboards, USB receiver and specially provided software.
➢ Application software for the programmed management of data and reports in the various phases of the course.

Projects are developed for organizing the courses that, in addition to the specific requests and instructions of the client, are based on the specific educational needs of sector and the qualifications and duties of the personnel destined to take part in the education/training activity.

In this field, the training needs associated with regulations on matters of safety in the workplace are always analyzed with particular care.

In addition, the projects take into account the initial knowledge of the personnel to be educated/trained, with reference to possible requirements requested for access to education/training (educational qualifications, acquired experience, attending previous training activities, etc.), as well as possible qualifications and duties already awarded/assigned to the personnel in question.

In any case, the courses consist of lessons, classified by subject, topic and level of depth, which are prepared in the form of film clips with multimedia content and are managed using PowerPoint or comparable software.

Depending on the specific contents and the training needs, up to three levels of lesson (base, advanced and specialist), in addition to extension classes, can be available for the various subjects or topics.

The teacher uses the lessons indicated in the list that is prepared by the system on the basis of the results of the evaluation of the learners' initial knowledge (ENTRANCE TEST) and preliminarily-set parameters.

Continuous evaluation is then carried out during the course, after each lesson, on the learners' learning and interest, in order both to keep the level of attention and participation high and to adjust course development and contents on the basis of this evaluation.

In fact, after each lesson and based on the learning and interest results, the teacher can repeat the same lesson or hold an extension class, if available, before passing to the next planned lesson.

The list of lessons effectively given, including any extensions and repetitions, is recorded and constitutes the basis for certification of the topics dealt with in the course.

For the purposes of objective evaluation of learning, intermediate tests and a final exam are planned, the results of which are saved for certifying the course attendance and learning of each learner.

The possibility of adjusting course contents to the learners' knowledge in real time is tied to the preliminary evaluation of this knowledge at the beginning of the course (ENTRANCE TEST) and to the methodology of the system that, based on the results achieved and according to the parameters set, automatically chooses the filmed lessons with multimedia content having the level most suited to the preparation of the learners.

Depending on the characteristics of the subject dealt with and the target audience to which the training activity is addressed, development of the teaching levels can take place in a vertical or horizontal manner.

In the vertical development of levels, for each subject dealt with there is a subdivision between base, advanced and specialist topics, and adjustment of course level takes place with reference to the learners' initial knowledge of the base topics, for which preparatory remote learning can also be provided.

In the horizontal development of teaching levels, the topics that must be dealt with for each subject are established, after which up to three levels of depth (base, advanced and specialist) are set up for each one of them; adjustment takes place on the basis of the learners' initial levels of knowledge in the individual topics.

In the vertical development, the course is structured by subdividing the topics concerning each of the subjects inserted in the plan into three levels:
➢ Base topics
➢ Advanced topics
➢ Specialist topics

For each of the levels, filmed lessons with multimedia content lasting approximately 50% of the hours planned for the subject dealt with are prepared.

For example, if 16 hours of lessons are planned for the subject, multimedia lessons will be available for:
➢ Base topics - 8 hours
➢ Advanced topics - 8 hours
➢ Specialist topics - 8 hours

In this way, there are always two course levels available for being given in the planned 16 hours (see Figure 2):
**Level 1 - base:**
   ➢ Base topics - 8 hours
   ➢ Advanced topics - 8 hours
**Level 2 - advanced:**
   ➢ Advanced topics - 8 hours
   ➢ Specialist topics - 8 hours

The topics excluded from the lessons of the course are however made available to the learners with a supplementary module prepared in paper-based/multimedia form (see Figure 3 and Figure 4), which can also be managed via remote learning. In particular, it is possible to supply learners with documentation regarding base topics beforehand, as in remote learning, in order to increase the level of initial knowledge and so favour the selection of level 2 after the entrance test to be given at the beginning of the course.

An ENTRANCE TEST is given on the base topics at the beginning of the course for level selection. (see Figure 5)

For the evaluation, reference values are set for the *minimum basic knowledge threshold* required for "Level 2". The threshold is expressed as the minimum marks that must be achieved, both for each individual topic and as the average for the subject, as in the example shown in Figure 6.

The minimum marks can be the same for all topics and subjects, or different according to the importance of the topic or subject, and even the effective level of depth of the prepared lessons. Naturally, the marks considered are the average ones for the class of learners.

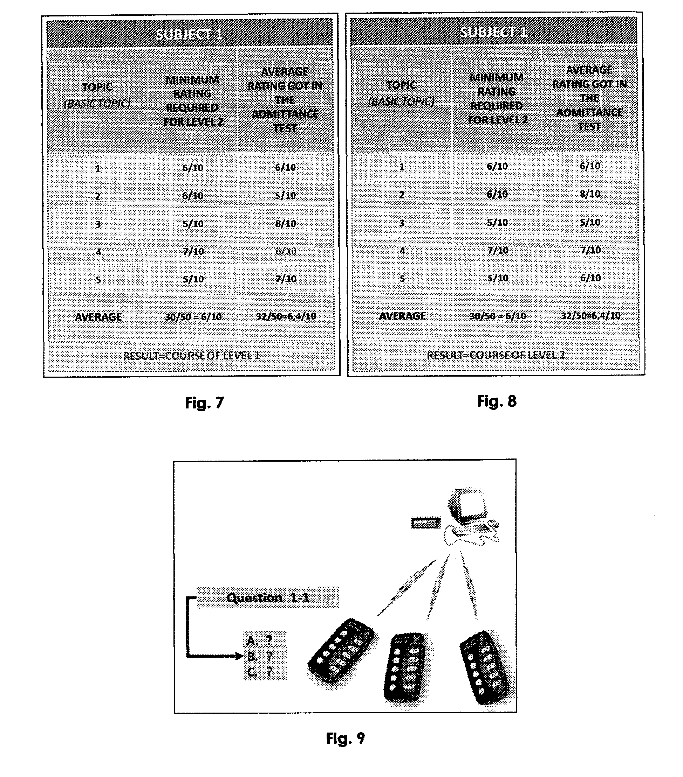

Therefore, for passage to "Level 2" it is necessary to achieve the minimum marks both as an overall average and for the individual topics, as indicated in the examples shown in Figures 7 and 8 in which, for the same subject average, in one case the selection of Level 1 is obtained and in the other that of Level 2, depending on the marks achieved in the individual topics.

The entrance test is carried out using multiple-choice questions regarding the base topics (10 each) and handled in PowerPoint (or comparable software) by means of electronic grading tools (see Figure 9)

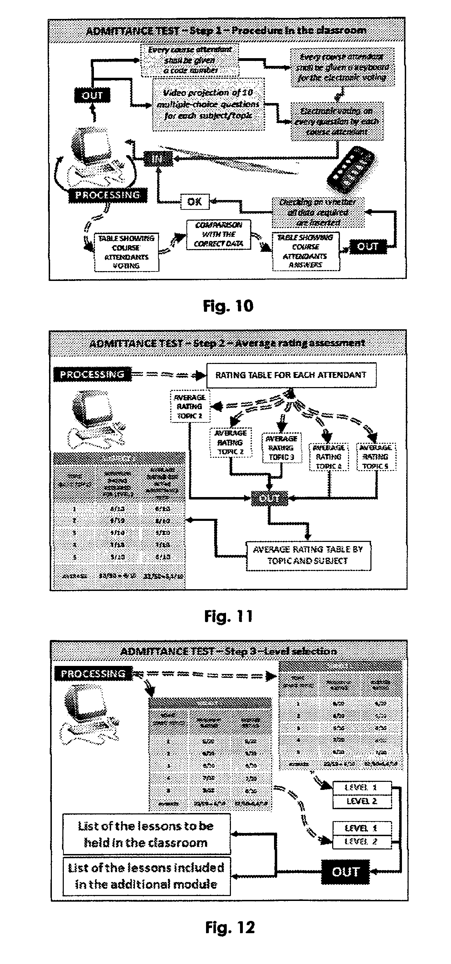

The test is carried with a classroom procedure that comprises (see Figure 10)
➢ giving keyboards to the learners
➢ video projection of the questions
➢ the individual marks and their recording on the system
➢ preparation of an answers table
➢ comparison of given answers with the correct ones
➢ preparation of the results table with learners' marks
➢ teacher checking the completeness of data
➢ final recording of marks

The system then proceeds with the calculation of the average marks of the class by subject/topic and the comparison with the minimum marks required for level selection, after which the system prints the list of the lessons to be given in the classroom and those for the supplementary module (see Figures 11 and 12).

In the horizontal development of levels, the course is structured by defining the topics that must be covered in each subject and preparing one or more filmed lessons with multimedia content for each one of them.

These lessons are prepared with two or three different levels of depth for those topics in which knowledge has sequentiality and for which the time dedicated in the course does not allow comprehensive treatment of all the knowledge available. In these cases it is important to choose the level of depth of the lessons according to the specific initial knowledge of the learners in so far as, on one hand, the treatment of more advanced or specialist knowledge would not be understood by learners with insufficient basic knowledge of the topic and, on the other hand, treatment of the basics would be pointless and cause disinterest in learners who have already acquired this knowledge.

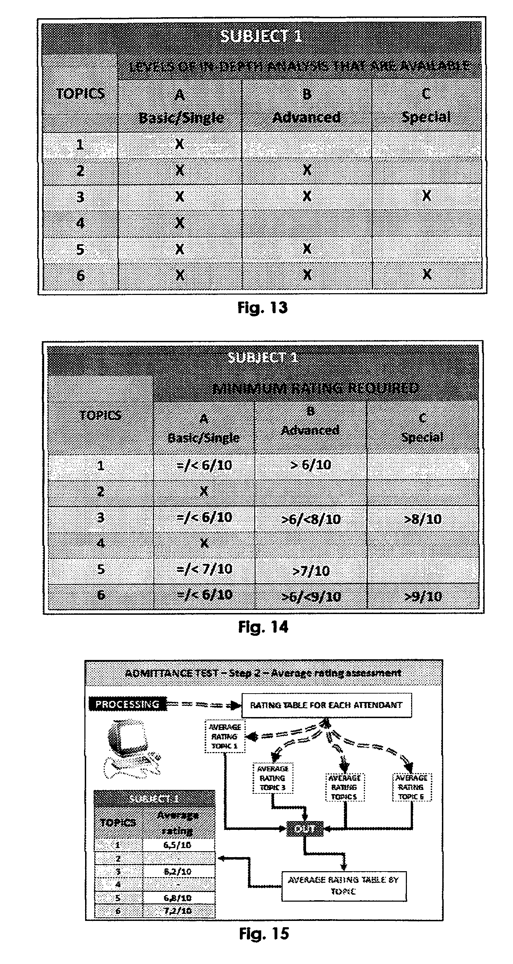

Therefore, in the course structure it is possible to have, for each subject, topics dealt with in lessons of a single level and others with two (base and advanced) or three (base, advanced and specialist) different levels of depth (see example in Figure 13).

Course adjustment takes place on the basis of the initial knowledge of the learners, determined with the ENTRANCE TEST, in the individual topics of each subject in which multiple levels of depth are contemplated.

For the evaluation, reference values are set for the minimum knowledge thresholds required for the various levels.

The minimum marks can be the same for all levels, topics and subjects, or different according to the importance of the topic or subject and the effective level of depth of the prepared lessons (see example in Figure 14). Naturally, the marks considered are the average ones for the class of learners.

The entrance test is carried out using multiple-choice questions regarding all the topics (10 each) for which multiple levels are contemplated and handled in PowerPoint (or comparable software) by means of electronic grading tools, as in the vertical development (see Figure 9).

The classroom procedure is the same as that shown for the vertical development (see Figure 10).

The system differentiates itself in the calculation methods of the average classroom marks for the topics covered in the test, in relation to the different organization of the topics and levels (see Figure 15).

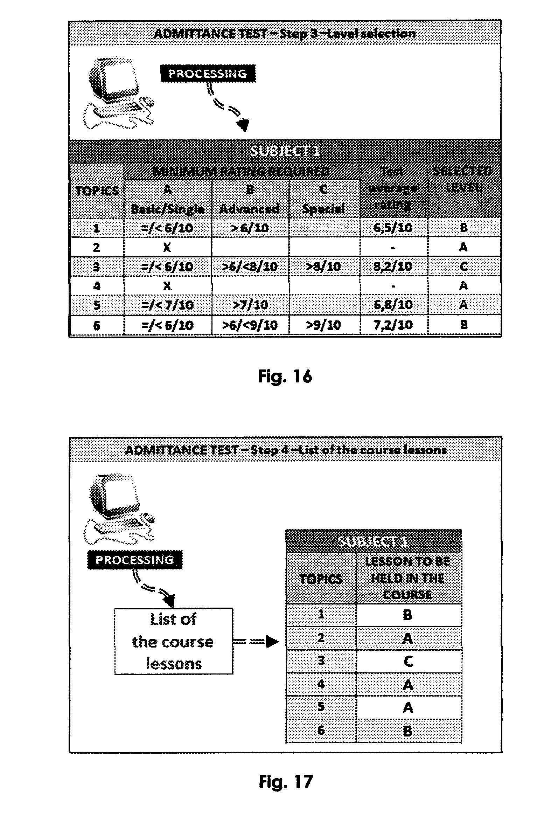

The system then compares the marks by topic with the preset minimum thresholds, proceeding with selection of the level (see Figure 16) and determining the lessons to be given in the classroom course (see Figure 17).

The system provides for continuous verification of the learners' learning level and interest with the objective of keeping the learners' level of attention and participation high, making them aware of their responsibilities in the *in itinere* construction of the educational path.

After each lesson, the learners are asked to give a self-assessment on both learning and level of interest for the topic.

As better shown further on, the system is adjusted by setting minimum learning and interest thresholds for passing to the next planned lesson or to special extension classes available for certain topics and levels. The threshold is set according to the type of topic, taking into account the possible need to guarantee that all learners learn certain topics (e.g. safety rules - operational procedures), the client's interest in favouring certain subjects (e.g. correct use and maintenance of equipment and tools) and other factors considered important in the planning of the training project.

Based on the results of the evaluation of learning and interest, development of the course is then adjusted after each lesson: with a learning level below that required, the last lesson held is repeated, while with a learning level equal or greater than that required, the course proceeds with the extension class (if available) if the learners' level of interest is equal or greater than that required by the system, otherwise the course proceeds to the lesson on the next topic.

In this way, the course is adjusted to the learners' learning and interests, thus making them participant in the construction of the training path.

In addition, the learning and interest results constitute valuable information for adjusting the structure of the courses and the teaching methods for subsequent sessions or versions of the course.

We shall now examine the procedure provided by the system in detail.

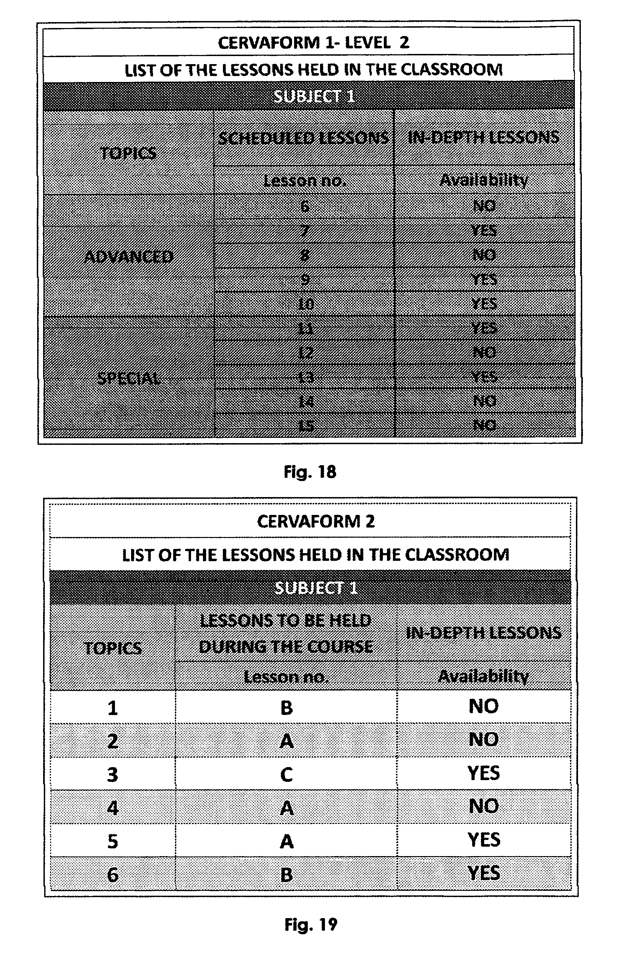

It has already been seen that after the entrance test, the system provides the teacher with the list of lessons to give in the classroom during the course. On that occasion, both for the version with vertical development (see example in Figure 18) and for the version with horizontal development (see example in Figure 19), the system also indicates the available extension classes, to be given if necessary as additional lessons depending on the learners' learning levels and interest. In the horizontal development, there is the possibility of making advanced or specialist level lessons available as extension classes when the lesson planned as the base one belongs to a lower level.

As regards the evaluation of learning and interest of learners, the evaluations are carried out using an electronic grading system and are held in two successive marking sessions at the end of each lesson (film clip lasting approximately five minutes).

The results are analyzed with reference to the entire class, guaranteeing the anonymity of individual learners in the data divulged on-screen, without prejudice to the possibility for the teacher to identify the assessments given by individual learners in order to adopt possible individual or group actions to remove systematic errors in the marking methods.

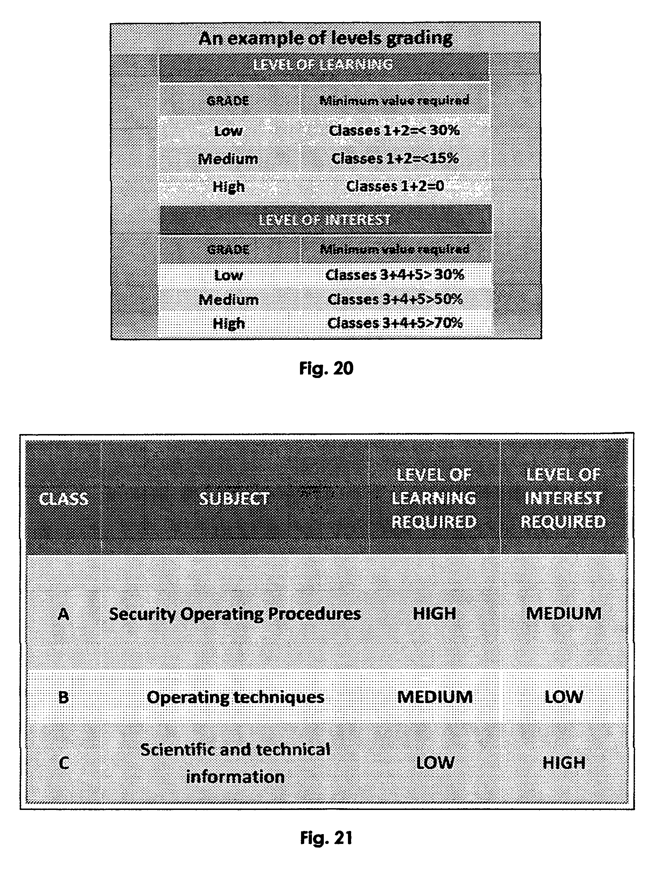

For the purposes of adaptive construction of the course, the system can be tuned by selecting different minimum learning and interest levels, thus determining an increase or decrease in the learning required for the basics of the planned lessons and/or extension topics (see example in Figure 20). For example:
➢ The raising of the required minimum learning level favours the repetition of concepts in the planned lessons until they are learnt by a growing proportion of learners.
➢ The lowering of the required minimum interest level favours giving a larger number of extension classes, yet always in a subordinate manner with respect to the planned lessons.

Selection of the required minimum level can be made, for example, on the basis of the subject to which the lessons refer to and on possible requirements for the mandatory knowledge of certain basics (e.g. high learning level for topics concerning safety rules) or for the purpose of favouring the in-depth study of certain topics considered important by the client (e.g. low level of interest required for the basics on the correct use and maintenance of equipment), as in the example shown in Figure 21.

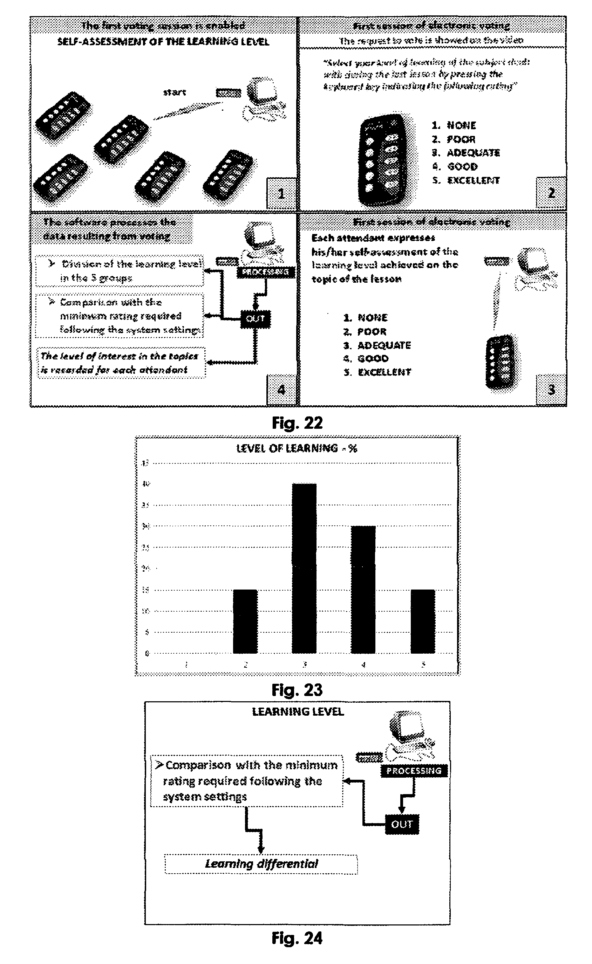

The first marking session concerns the evaluation of learning, which is carried out by the learners via self-assessment, expressed with a scale of values displayed on-screen, according to the procedure indicated in Figure 22.

The system shows the marking results by means of a histogram that can be projected on-screen or be examined by the teacher in private (Figure 23).

The system shows the gain with respect to the required minimum learning value (Figure 24). The achievement or not of a sufficient learning level results in passing to the next lesson or repeating the last lesson.

The evaluation of interest is carried out after the first evaluation of learning, even in the case when the learning level is negative (level lower than the required minimum), in order to acquire a complete sequence of the learners' interest for the various topics dealt with in the course.

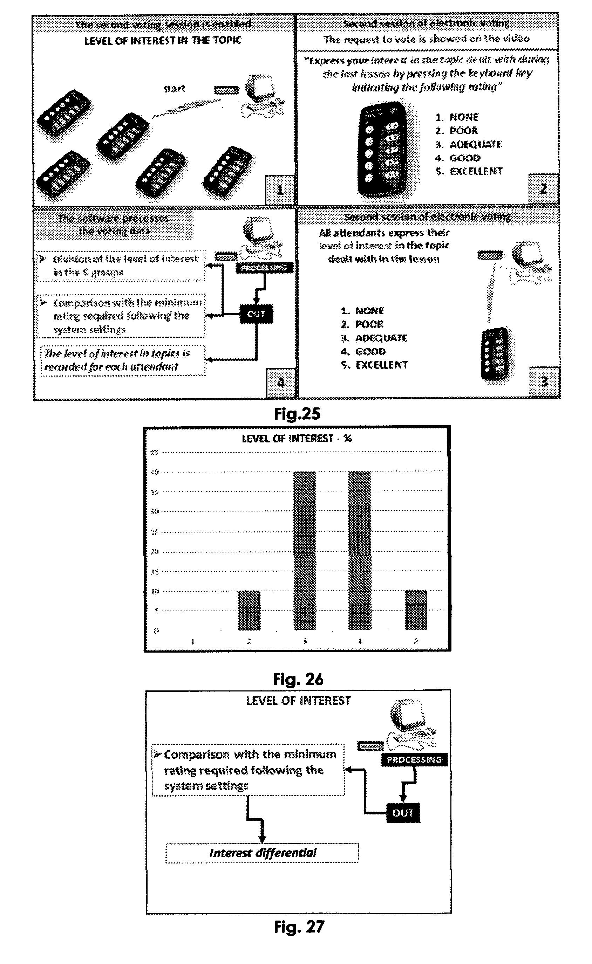

The evaluation of interest is carried out using a procedure similar to the previous one, activating and managing a second marking session as shown in Figure 25.

In this case as well, the system shows the marking results by means of a histogram that can be projected on-screen or be examined by the teacher in private.

The system shows the gain with respect to the required minimum interest value. The achievement or not of a sufficient level of interest results in passing to the extension class, if available for that topic and on condition that the minimum learning level has been passed.

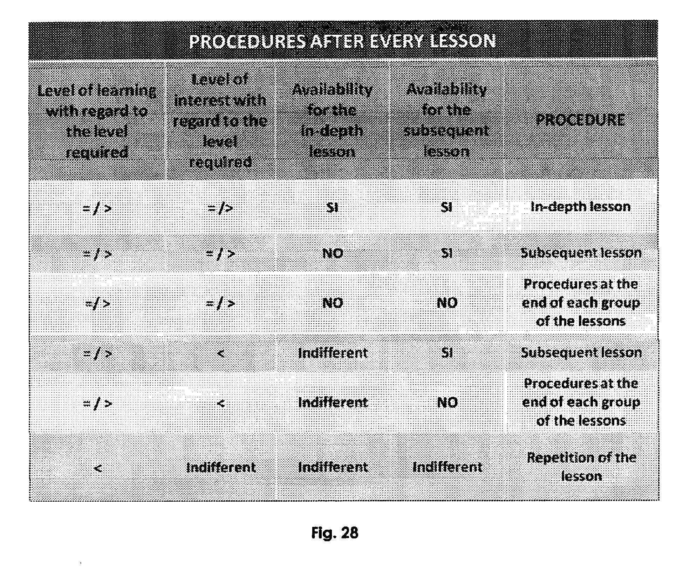

Based on the levels of interest and learning, in addition to the structure of the course, it is also possible to determine the following procedural options after each planned lesson:
a. Passage to the extension class
b. Repetition of the last lesson
c. Passage to the next planned lesson
d. Terminate the group of lessons as shown in Figure 28.

In the case of lesson repetition, upon its completion the evaluation of learning is repeated using the same procedure as already described.

If the learning gain is always negative, the learners that do NOT reach the required minimum learning level are identified and the teacher provides a personalized explanation until it is certain that the topic has been understood.

Finally, as regards the management of adustments, it has already been stated that the courses are given by means of filmed lessons with multimedia content, catalogued by subject, topic and level, also with the different organization provided for the vertical and horizontal developments.

Following the results of the ENTRANCE TEST, the teacher is provided with a list of the planned lessons to be given and the extension classes available.

In order to avoid searching for film clips in an archive, the teacher disposes of a support in PowerPoint (or comparable software) in which all of the lessons of the course are available, mounted in logical sequence and with the possibility of rapidly choosing the lessons based on the initial adjustment and the *in itinere* ones based on the continuous evaluation of learning and interest.

In the vertical development, the structure of the support in PowerPoint is simpler because with the vertical development of the teaching levels the management of the two different course levels takes place by moving the start and end points inside the packet of topics available for the subject dealt with.

Instead, in the horizontal development of the teaching levels, it is necessary to have all levels available at each selection step. In this sense, it should be remembered that in the horizontal development, next to exclusively extension classes, advanced or specialist level lessons can also be considered as extensions when the lesson planned as the base one via the entrance test belongs to a lower level.

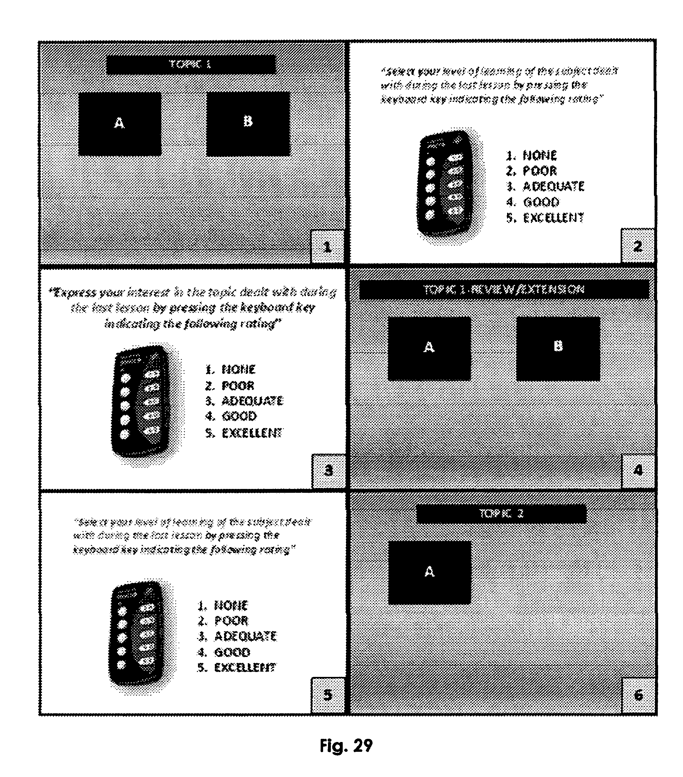

Figures 29, 30 and 31 show an example of a series of lessons and evaluation activities for learning and interest, set up on a PowerPoint (or comparable software) support for the horizontal development, in which film clips (identified by the letters A, B, C, +) are inserted as objects linked to files in a specially provided folder.

According to the inventive feature of the objective verification of learning, the continuous verification of learning is based on evaluation by learners' self-assessment and is designed to ensure the repetition of topics not understood, without this entailing either exposition fragmentation or a drop in attention by the class as a whole, or a significant waste of time, especially in numerous classes.

Nevertheless, it is necessary to assist this verification with objective methods for the objective evaluation of learning, by means of intermediate and finals tests based on multiple-choice questions.

As regards the objective *in itinere* evaluation composed of intermediate exams, to guarantee a close connection between development of the topics of the various subjects and the relevant objective evaluation of learning, intermediate exams that cover individual subjects or groups of topics are set, according to the number of lessons for each subject and their organization in one or more course days.

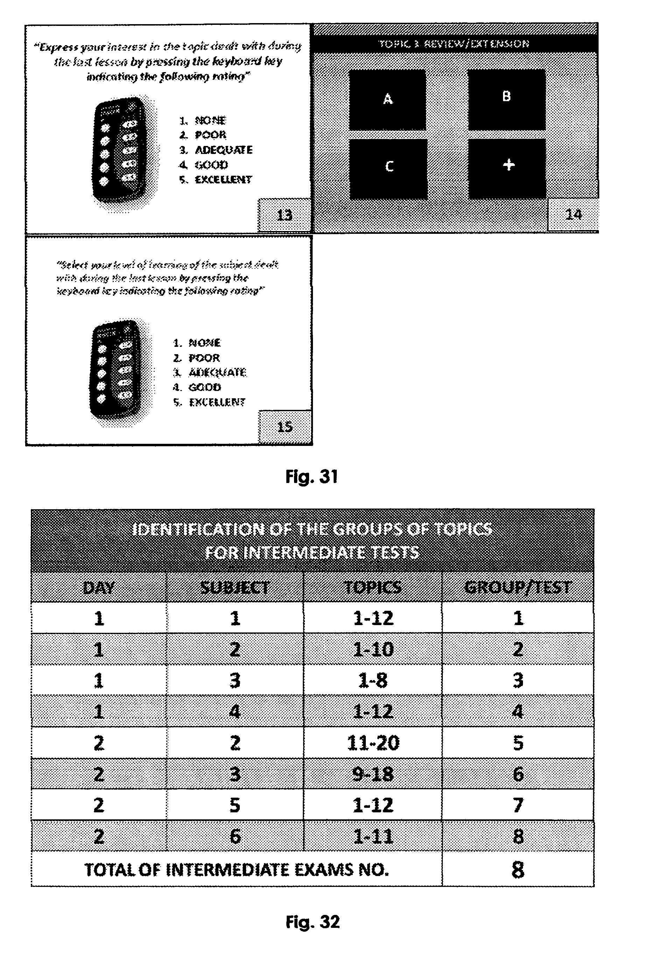

Thus, as a rule, the identification of the modules to which the intermediate exams refer is by groups of lessons on the same subject held on the same course day; an example of topic grouping for intermediate exams is shown in Figure 32.

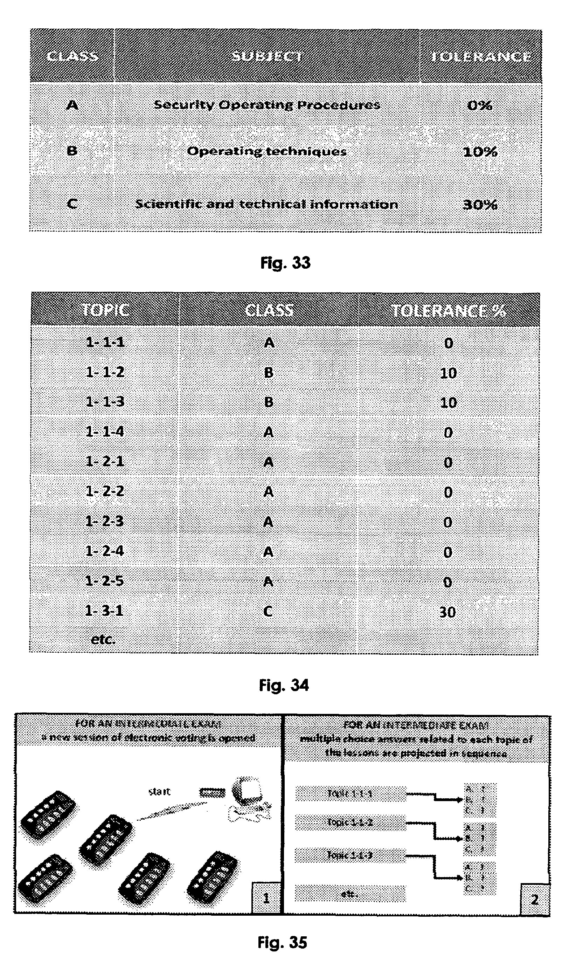

The intermediate exams are given by means of multiple-choice questions connected with the lessons given for the individual topics. The questions are displayed on-screen and the answers are supplied via an electronic grading system (Figure 35).

A maximum error limit, based on the preset tolerance for the subject or topic category to which it is associated, is set for each question. For example, various subject/topic categories can be identified as indicated in the example shown in Figures 33 and 34.

The execution procedure for the intermediate exam is shown in Figures 35, 36 and 37.

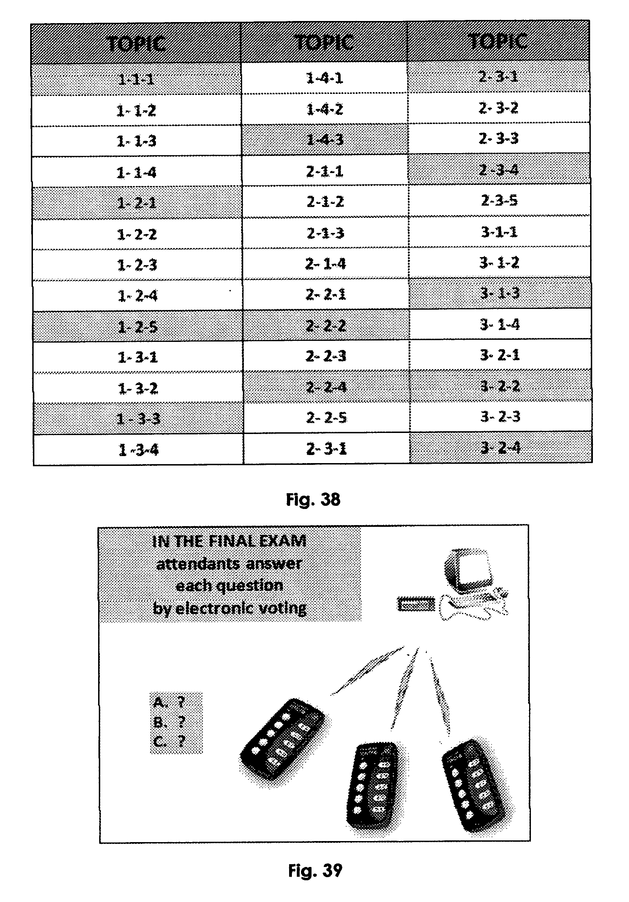

As regards the final exam, at the end of the course, a final exam is given based on multiple-choice questions, randomly selected from those used in the intermediate exams, but in representative proportions of the groups of lessons given, as in the example shown in Figure 38, in which the questions chosen for the final exam are highlighted in yellow.

The procedure is entirely similar to that used for the intermediate exams, i.e. the electronic grading session is activated and the learners answer each question by means of a push-button panel (Figure 39).

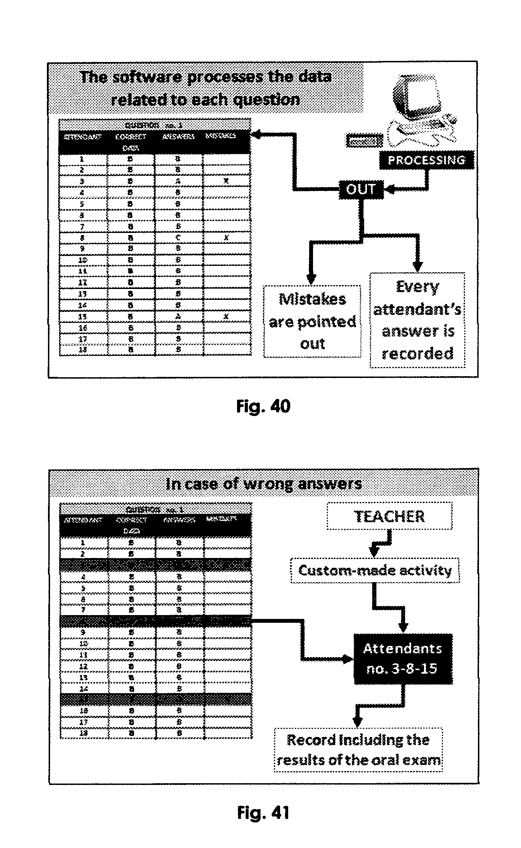

For each question, the system carries out a comparison with the correct data and records the answers of the individual learners (Figure 40).

If there are errors in the learners' answers, the teacher carries out a personalized activity explaining the topics with errors to the learners who have given wrong answers and immediately afterwards gives an oral test. For the purposes of certification, the teacher draws up a statement, to be countersigned by the learner, in which the personalized activities carried out and the achieved results are noted (Figure 41).

As regards the certification, one of the main objectives of the inventive system and process is also that of providing for every learner the objective and documented certification of training activity attendance, detailing the lesson plan effectively followed and the related basics learnt.

This objective is achieved through the detailed recording and subsequent processing of data regarding:
➢ the location and duration of the course;
➢ the teachers;
➢ the teaching activities effectively carried out following the initial and *in itinere* course adjustment mechanisms;
➢ the results of learning and interest evaluations;
➢ the results of intermediate and final exams.

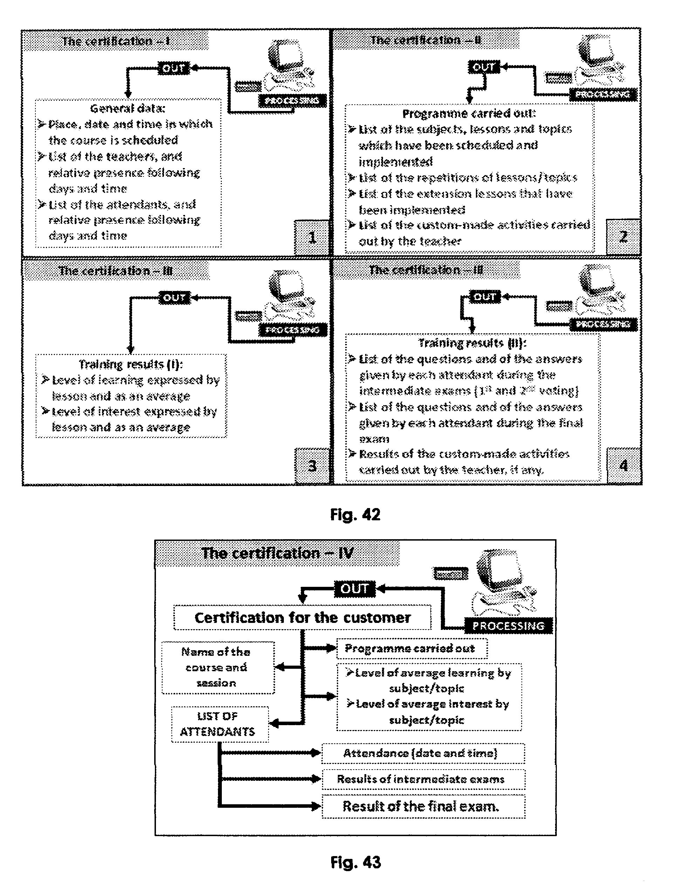

The client is supplied with all training activity data and results, both overall and in the form of certification with a list of the persons trained, details of the activities carried out and the verified learning of the learners, etc. (see Figure 43). This is of great importance for the purposes of certifying the actual giving of a suitable training activity in cases of obligatory education/training pursuant to current regulations on matters of safety in the workplace.

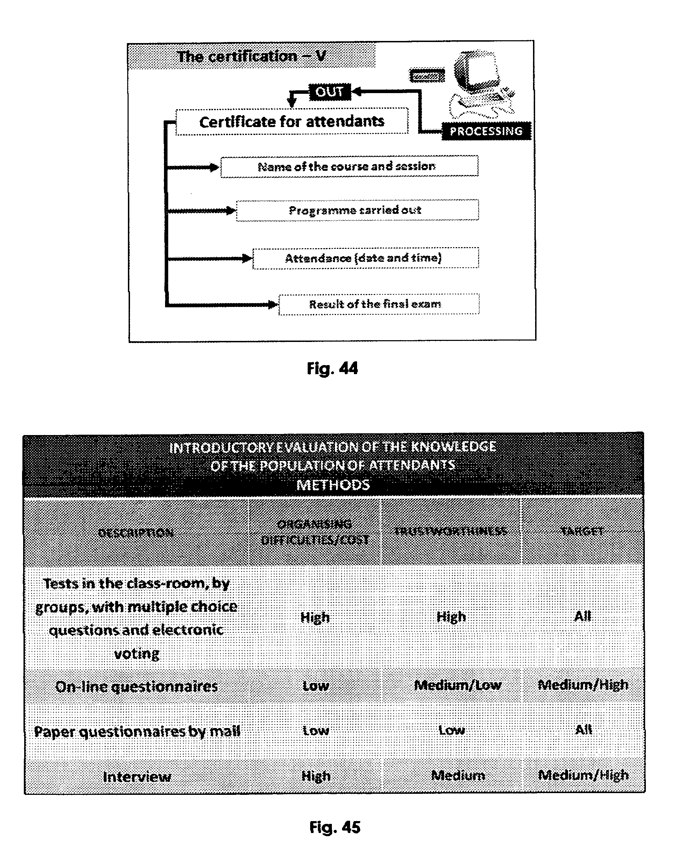

A certificate is given to each course participant indicating general course information, attendance and final marks (Figure 44).

As optional and preparatory variation for management the inventive system and process, a preliminary evaluation is provided of the level of knowledge of potential learners in order to select homogeneous groups and/or to personalize the training project with activities intended to reduce the difference in the levels of knowledge of the learner population before beginning the actual training activity.

The application of this variation of the inventive system and process allows their potential to be enhanced because it permits working with classes of learners that are more homogeneous with regards to initial knowledge. In this way, it is possible to achieve better training thanks both to the higher levels of initial in-depth course study that can be adopted and to the larger number of extension classes that can be held during the course for the best response in terms of learning and professional interest of the learners.

The preliminary evaluation of the level of knowledge of the entire learner population can only be contemplated for projects that involve a large number of learners and that can be carried out using various methods, of varying cost and more or less valid according to the learners' cultural level and their knowledge of information science and technology (see Figure 45)

Naturally, in order to personalize the training project to favour the largest number of learners and obtain the largest possible educational gain (*difference between the level of knowledge before and after the training activity*) in the examined population, the analysis of the level of knowledge must not regard individual learners, but rather the data regarding the entire population.

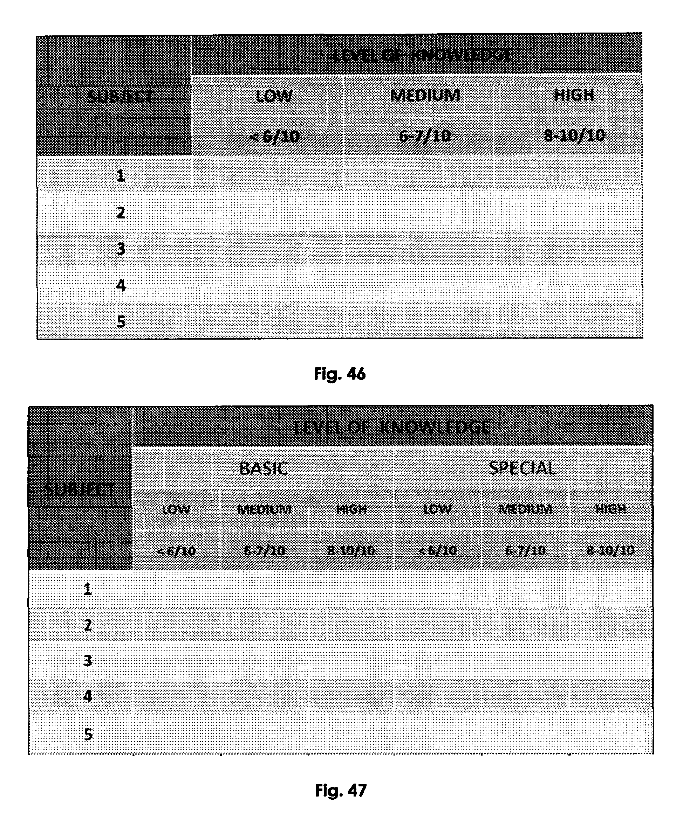

The preliminary evaluation must regard the individual subjects envisaged in the training project, with standard reference values being set (Figure 46).

A closer-targeted preliminary evaluation (Figure 47) can include separating analysis of the level of knowledge into:
➢ Basic knowledge, propaedeutic to course specialist knowledge in the same subject.
➢ Specialist knowledge, related to the basics of the course.

In this way, the following can be taken as references:
➢ The basic level of knowledge, in order to insert possible preliminary modules, also remote-learning ones, into the training project, in cases of low survey levels.
➢ The level of specialist knowledge to determine beforehand the most suitable levels of depth to adopt in setting up the lessons for the individual subjects.

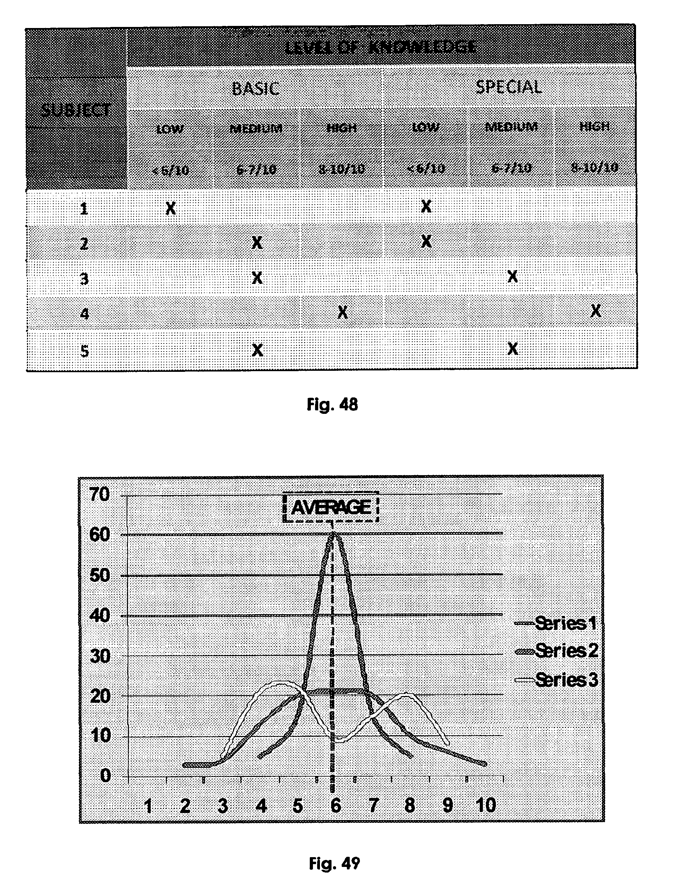

In the example shown in Figure 48, a result from an evaluation carried out with the variation of the inventive system and process is indicated from which the need for a basic preliminary module in subject 1 is evident and indications emerge for low levels of depth in subjects 1 and 2, average ones in subjects 3 and 5 and high ones in subject 4.

However, this analysis can only bring better results if the parameters regarding population homogeneity are considered, also in order to check the possible presence of distinct groups with different levels of knowledge.

In fact, the same value of average marks achieved by the population can derive from quite different distributions of individual knowledge (Figure 49), to which different requirements and choices for constructing the training project are associated.

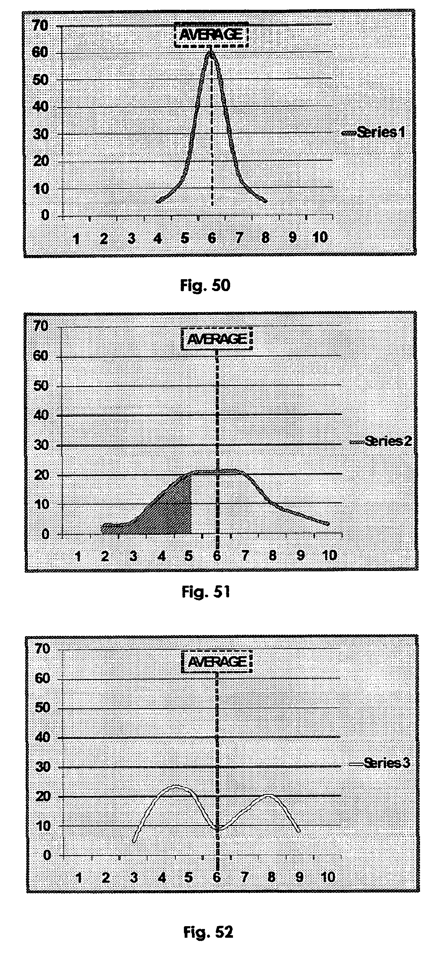

Three different cases are indicated in Figures 50, 51 and 52:
➢ Case 1 (Figure 50) is the simplest because it reveals a fairly homogeneous learner population, which therefore allows a single training project to be constructed, without preliminary correctives.
➢ Case 2 (Figure 51) instead reveals less homogeneity and the need for organizing the training project on two distinct course levels or for preliminary correctives to raise the level of knowledge of the numerically substantial lower bands.
➢ Case 3 reveals the presence of two distinct groups having different levels of knowledge, which suggests organizing the training project in two separate course levels.

Based on the preliminary evaluation of the learner population's knowledge made using the variation of the inventive system and process, the training project can thus be personalized with:
■ Preliminary training modules, also remote-learning ones, for one or more subjects, in order to raise the basic level of knowledge of the entire learner population or just a part thereof.
■ The choice of more suitable levels of depth on the various specialist subjects, according to the learners' level of knowledge.
■ The organization of the project into two or more levels to be used for learner groups selected according to the different levels of knowledge.

The inventive system and process can be used also for the electronic remote learning (so called "e-learning").

The application of the inventive system and process to e-learning is based on the same principles, objectives and methods already described previously, for classroom face-to-face training, with the necessary adjustments to make it suitable for the different teaching method employed.

The procedure of the inventive system and process for e-learning is specified in the following with only summary reference to the previous principles and methods, which are considered as already acquired from the previous treatment, namely:
➢ adjustment of the education plan to the initial level of knowledge of the learner.
➢ continuous adjustment of the educational path according to the learner's learning and professional interest for each topic dealt with.
➢ objective evaluation of learning.
➢ recording of educational path for the purposes of objective certification of the training activity.

The system therefore allows every learner to be provided with the training path in the subjects dealt with that is most suited to his/her level of knowledge, learning capabilities and effective professional interest for the various topics dealt with.

Furthermore, remembering that the system is particularly dedicated to obligatory educational and training activities on matters regarding safety in the workplace and, more in general, training activities for which valid certification is requested, even the e-learning application provides for phases of learner identification, objective evaluation of learning and, above all, the recording and objective certification of carrying out the training activity.

It is precisely in this sense that the variation of the inventive system and process resolves the problem of the validity of certificates issued for remote learning, since this type of learning does not ensure the certainty of the learner's identity, nor his/her trustworthiness in the evaluation phase, unless working in specially controlled classrooms.

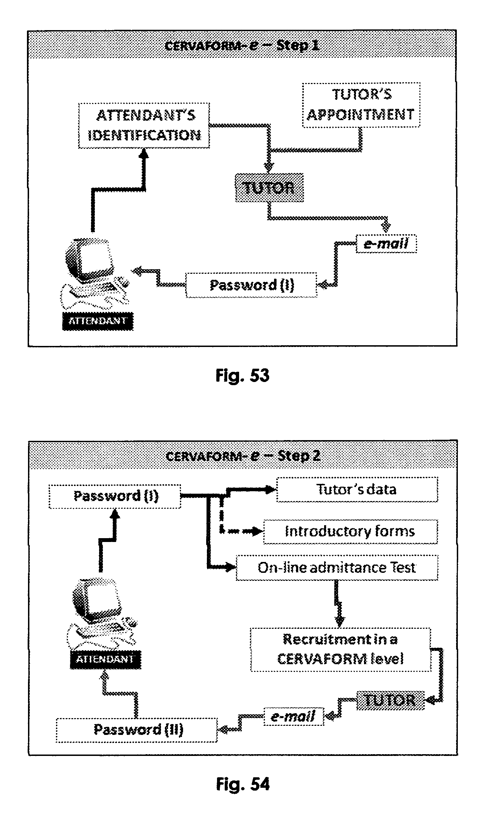

Even if dealing with a remote system, the running of the course is therefore personalized with the aid of a Tutor who follows and checks the learner's entire educational path, also for certification purposes (Figure 53).

For enabling access to the course, the learner must be officially identified, i.e. via a copy of an identity document with a photograph, which must be available to the Tutor (Figure 53).

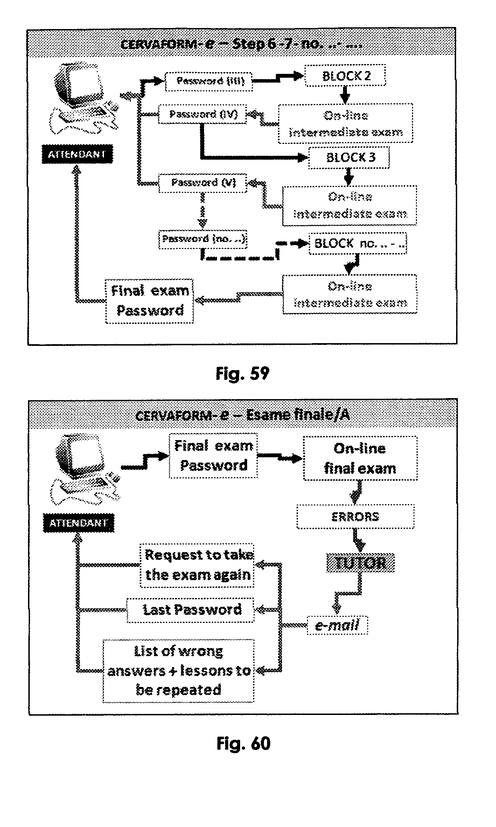

The running of the course is subdivided into blocks that the learner can access via successive access passwords (Figure 59). This structure and the procedure for successive password generation is designed to give greater importance to the intermediate exams, which permit passing to the next block, and for binding the passing of each exam to a formal act performed by the Tutor for the final certification of the training activity.

The learner authorized to access the e-learning course is supplied, via e-mail from the Tutor, with a first system access password (Figure 53), which enables him/her to access the first training block via the Internet and in which the following are available (Figure 54):
➢ Identification of referent tutor.
➢ Any preliminary teaching modules, consisting of texts and/or film clips viewable on-line.
➢ Entrance test to be taken on-line.

For the initial adjustment of the education plan, multiple levels for the same course are prepared in this application as well, developing the teaching levels vertically or horizontally, in order to assign the most appropriate level to each learner according to his/her initial knowledge, as evaluated via the Entrance test.

With the exception of utilizing the on-line mode from the learner's computer instead of electronic grading in the classroom, the entrance test is structured and carried out with the methods indicated for the previous vertical and horizontal developments. Naturally, in this case, the marks achieved by the individual learner are considered and not the average ones of the class, as indicated for face-to-face training systems in the classroom.

Depending on the marks achieved in the entrance test, the Tutor sends the learner a second system access password (Figure 54), via e-mail, which is generated to access the course level corresponding to the marks achieved.

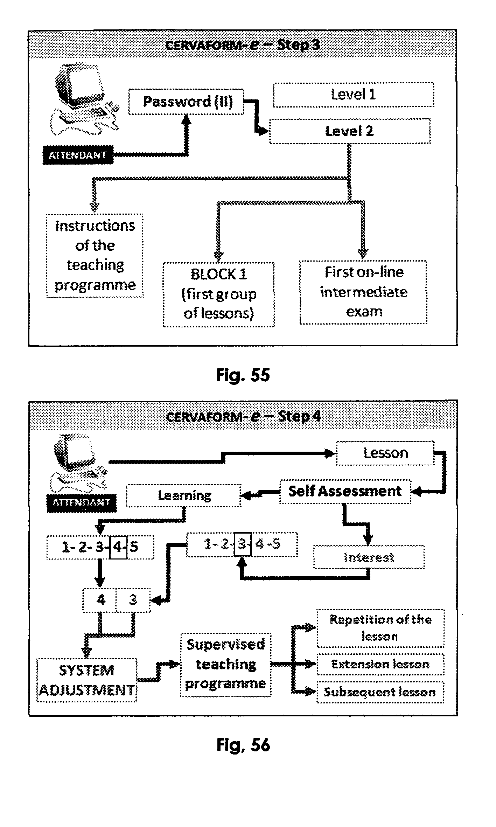

With the second password, the learner can access the following via the Internet (Figure 55):
➢ instructions for development of the educational path,
➢ the first group of lessons (consisting of film clips viewable on-line and any supporting texts)
➢ the first intermediate exam to take on-line.
At the end of each lesson (Figure 56) the learner performs self-assessment for the level of learning and that for interest in the topic deal with, according to the scale of values already indicated previously: 1 - Very Poor, 2 - Insufficient, 3 - Sufficient, 4 - Good, 5 - Excellent.

The system provides instructions for the guided educational path (Figure 56) based on the results of the learning and interest test, i.e. it indicates to the learner whether to repeat the lesson, or pass to the extension class or to the next topic, according to the diagram already shown in Figure 28.

At the end of the group of lessons, the learner can take the on-line intermediate exam associated with the same group of lessons, which consists of a series of multiple-choice questions regarding the topics of the lessons themselves.

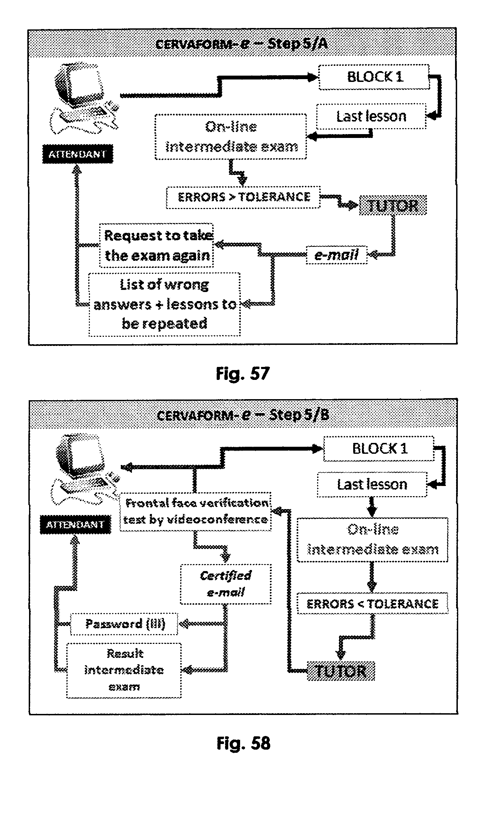

If learner exceeds the allowed tolerance limit (Figure 57) in the intermediate exam, or rather, the allowed number of wrong answers according to the subject dealt with (see Figures 33 and 34), the Tutor sends a list of the wrong answers to the learner via e-mail, inviting him/her to repeat the relevant lessons and the on-line intermediate exam.

Instead, if the learner passes the on-line intermediate exam (Figure 58), the Tutor:
➢ carries out a face-to-face verification test with the learner, by means of a videoconferencing system, with random checking on the learner's capacity to answer questions on the exam already taken in person;
➢ in cases where the face-to-face verification test is successfully passed, an e-mail certificate indicating the results of the intermediate exam and a new password to access the next block is sent to the learner.

The procedure continues until all the blocks of lessons have been completed (Figure 59).

The chronology of access password generation and the marks achieved in the intermediate exams, also certificated by the Tutor via face-to-face verification using videoconferencing systems, allows the educational path and the learning results of each learner to be recorded in an objective manner.

To obtain certification for the training received, the learner must take a final exam on-line, which is accessed via a password generated and sent by the Tutor after the last exam is passed (Figure 59).

The final exam consists of a series of multiple-choice questions regarding all the blocks of lessons taken.

In the case of errors in the final exam (Figure 60), the system indicates the wrong answers and the lessons in which the relevant topics are contained. In this case, the Tutor sends the list of wrong answers and the lessons to repeat via e-mail, together with a last password that gives access to all the blocks of lessons and to repeating the final exam, which is given with a different set of questions from the previous one.

If the learner does not pass the second exam, he/she cannot obtain certification for the training received.

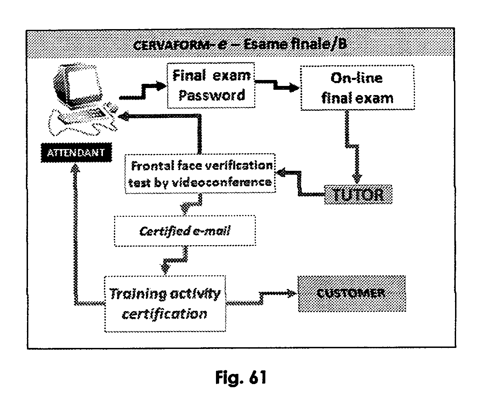

Instead, if the final exam is successfully passed (Figure 61), the Tutor carries out a face-to-face verification test with the learner, by means of a videoconferencing system, with random checking on the learner's capacity to answer exam questions in person.

If the test is successfully passed, certification is awarded for the training path (Fig. 61), both in favour of the individual learner and possibly of the course client, such as the learner's employer, listing the teaching programme given, the dates and the results of the intermediate and final exams passed and the name of the Tutor who has checked and certified the following of the training path.

## Claims

**1.** Process for evaluating, updating and certifying the formation of learners, comprising the steps of:
- providing courses composed of lessons, classified by subject, topic and level of depth, which are prepared in the form of film clips with multimedia content and are managed using an information support;
- for the various subject or topics, depending on the specific contents and the training needs, providing up to three levels of lesson (base, advanced and specialist), in addition to extension classes;
- using the lessons indicated in the list that is prepared on the basis of the results of the evaluation of the learners' initial knowledge and preliminarily-set parameters;
- during the course, continuously evaluating, after each lesson, the learners' learning and interest, in order both to keep the level of attention and participation high and to adjust course development and contents on the basis of this evaluation;
- after each lesson and based on the learning and interest results, possibly repeating the same lesson or hold an extension class, if available, before passing to the next planned lesson, the list of lessons effectively given, including any extensions and repetitions, being recorded and constituting the basis for certification of the topics dealt with in the course;
- for the purposes of objective evaluation of learning, providing intermediate tests and a final exam, the results of which are saved for certifying the course attendance and learning of each learner;
- adjusting course contents to the learners' knowledge in real time, following the preliminary evaluation of this knowledge at the beginning of the course, and to the methodology of the process, the process, based on the results achieved and according to the parameters set, automatically choosing the filmed lessons with multimedia content having the level most suited to the preparation of the learners; and
- depending on the characteristics of the subject dealt with and the target audience to which the training activity is addressed, providing a development of the teaching levels.

**2.** Process according to claim 1, wherein the development of teaching levels occurs vertically, for each subject dealt with there being a subdivision between base, advanced and specialist topics, and adjustment of course level taking place with reference to the learners' initial knowledge of the base topics, the minimum average marks per class being the same for all topics and subjects, or different according to the importance of the topic or subject, but even the effective level of depth of the prepared lessons.

**3.** Process according to claim 1, wherein the development of training levels occurs horizontally, establishing the topics that must be dealt with for each subject, and then setting up, for each topics, up to three levels of depth (base, advanced and specialist), the adjustment taking place on the basis of the learners' initial levels of knowledge in the individual topics, the course being structured by defining the topics that must be covered in each subject and preparing one or more filmed lessons with multimedia content for each one of the topics, the lessons being prepared with two or three different levels of depth for those topics in which knowledge has sequentiality and for which the time dedicated in the course does not allow comprehensive treatment of all the knowledge available.

**4.** Process according to claim 2 or 3, wherein the test is carried with a classroom procedure that comprises the following steps:
➢ giving keyboards to the learners,
➢ video-projecting the questions,
➢ individual marks and their recording on the system,
➢ preparing a summarising table of answers,
➢ comparing given answers with correct answers,
➢ preparing the results table with learners' marks,
➢ checking the completeness of data by the teacher,
➢ final recording of marks,
➢ computing the average marks of the class by subject/topic according to the vertical or horizontal development of learning levels,
➢ comparing with the minimum marks required for level selection,
➢ printing the list of the lessons to be given in the classroom and those for the supplementary module.

**5.** Process according to claim 1, wherein:
- the step of providing extension classes comprises, in the horizontal development, the possibility of making advanced or specialist level lessons available as extension classes when the lesson planned as the base one belongs to a lower level;
- the step of evaluating learner's learning and interest is performed by using an electronic grading system that is held in successive marking sessions at the end of each lesson, the results being analyzed with reference to the entire class, without prejudice to the possibility for the teacher to identify the assessments given by individual learners in order to adopt possible individual or group actions to remove systematic errors in the marking methods;
- for the purposes of adaptive construction of the course, the process is tuned by selecting different minimum learning and interest levels, thus determining an increase or decrease in the learning required for the basics of the planned lessons and/or extension topics, the raising of the required minimum learning level favouring the repetition of concepts in the planned lessons until they are learnt by a growing proportion of learners, the lowering of the required minimum interest level favouring giving a larger number of extension classes, yet always in a subordinate manner with respect to the planned lessons.

**6.** Process according to claim 5, wherein:
- the first marking session concerns the evaluation of learning, which is carried out by the learners via self-assessment, expressed with a scale of values, the system showing the marking results by means of graphical representations, for example with histograms, the system showing the gain with respect to the required minimum learning value, the achievement or not of a sufficient learning level resulting in passing to the next lesson or repeating the last lesson;
- the evaluation of interest is carried out after the first evaluation of learning, even in the case when the learning level is lower than the required minimum, in order to acquire a complete sequence of the learners' interest for the various topics dealt with in the course, the evaluation of interest being carried out using a procedure similar to the previous one, activating and managing a second marking session;
- in the second marking session, the process shows the marking results by means of a graphic representation, and shows the gain with respect to the required minimum interest value, the achievement or not of a sufficient level of interest resulting in passing to the extension class, if available for that topic and on condition that the minimum learning level has been passed.

**7.** Process according to claim 5 or 6, wherein, based on the levels of interest and learning, in addition to the structure of the course, the following procedural options after each planned lesson are determined:
a. Passage to the extension class
b. Repetition of the last lesson
c. Passage to the next planned lesson
d. Terminate the group of lessons.

**9.** Process according to claim 2 or 3, wherein:
- the management of adjustments is performed having available all the lessons of the course, mounted in logical sequence and with the possibility of rapidly choosing the lessons based on the initial adjustment and the *in itinere* ones based on the continuous evaluation of learning and interest;
- in the vertical development of teaching levels, the structure of the two different course levels with the stored lessons takes place by moving the start and end points inside the packet of topics available for the subject dealt with;
- in the horizontal development of teaching levels, all levels are available at each selection step, next to exclusively extension classes, advanced or specialist level lessons being also considered as extensions when the lesson planned as the base one via the entrance test belongs to a lower level.

**9.** Process according to claim 1, wherein:
- the continuous verification of learning is based on evaluation by learners' self-assessment and is designed to ensure the repetition of topics not understood, this verification being integrated by objective methods for the objective evaluation of learning, by means of intermediate and final tests based on multiple-choice questions;
- to guarantee a close connection between development of the topics of the various subjects and the relevant objective evaluation of learning, intermediate exams that cover individual subjects or groups of topics are set, according to the number of lessons for each subject and their organization in one or more course days, the identification of the modules to which the intermediate exams refer is by groups of lessons on the same subject held on the same course day;
- at the end of the course, a final exam is given based on multiple-choice questions, randomly selected from those used in the intermediate exams, but in representative proportions of the groups of lessons given, the procedure being similar to that used for the intermediate exams, for the purposes of certification a statement being provided, to be countersigned by the learner, in which the personalized activities carried out and the achieved results are noted.

**10.** Process according to claim 1, wherein, for every learner, the objective and documented certification of training activity attendance is provided, detailing the lesson plan effectively followed and the related basics learnt, said certification being obtained through the detailed recording and subsequent processing of data regarding:
➢ the location and duration of the course;
➢ the teachers;
➢ the teaching activities effectively carried out following the initial and *in itinere* course adjustment mechanisms;
➢ the results of learning and interest evaluations;
➢ the results of intermediate and final exams; said training activity data and results being supplied to the learner, both overall and in the form of certification with a list of the persons trained, details of the activities carried out and the verified learning of the learners.

**11.** Process according to claim 1, wherein a preliminary evaluation of the level of knowledge of potential learners in order to select homogeneous groups and/or to personalize the training project with activities intended to reduce the difference in the levels of knowledge of the learner population before beginning the actual training activity, the analysis of the level of knowledge regarding not individual learners, but rather the data regarding the entire population, the training project being personalized with:
■ preliminary training modules, also remote-learning ones, for one or more subjects, in order to raise the basic level of knowledge of the entire learner population or just a part thereof;
■ the choice of more suitable levels of depth on the various specialist subjects, according to the learners' level of knowledge;
■ the organization of the project into two or more levels to be used for learner groups selected according to the different levels of knowledge.

**12.** Process according to claim 1, wherein the process is used for the application of the electronic remote training, e-learning, such application providing for phases of learner identification, objective evaluation of learning and the recording and objective certification of carrying out the training activity, the e-learning application being personalized with the aid of a Tutor who follows and checks the learner's entire educational path, also for certification purposes, the e-learning application providing for multiple levels for the same course, developing the teaching levels vertically or horizontally, in order to assign the most appropriate level to each learner according to his/her initial knowledge, as evaluated via an Entrance test, depending on the marks achieved in the entrance test, the Tutor allowing the learner to remotely have access to:
➢ instructions for development of the educational path,
➢ the first group of lessons (consisting of film clips viewable on-line and any supporting texts),
➢ the first intermediate exam to take on-line,
at the end of each lesson, the learner performing self-assessment for the level of learning and that for interest in the topic dealt with, based on the results of the learning and interest test, the process providing instructions for the guided training path, at the end of the group of lessons, the learner accessing the on-line intermediate exam associated with the same group of lessons; if the learner passes the intermediate exam, the Tutor:
➢ carrying out a face-to-face verification test with the learner, by means of a videoconferencing system, with random checking on the learner's capacity to answer questions on the exam already taken in person;
➢ in cases where the face-to-face verification test is successfully passed, allowing the learner to access the next block, till all blocks of lessons have been completed; and
➢ admitting then the learner to the final exam in which, after having passed the final exam, the Tutor carries out a face-to-face verification test with the learner, with random checking on the learner's capacity to answer exam questions in person;
➢ if the test is successfully passed, certification is awarded for the training path in favour of the individual learner, listing the teaching programme given, the dates and the results of the intermediate and final exams passed and the name of the responsible Tutor.

**13.** System for evaluating, updating and certifying the formation of learners, adapted to carry out the process according to any one of the previous claims, said system comprising:
➢ lessons planned and recorded as film clips with multimedia content organized in several levels of depth for each subject or topic,
➢ sets of multiple-choice questions regarding the subjects and topics of the entrance test, to be given at the beginning of the course to evaluate the learners' knowledge;
➢ means for setting the minimum grading levels to be reached for access to the various programmable lesson levels of the course;
➢ means for setting the minimum learning levels to be reached in the various subjects/topics for passing each step of continuous evaluation;
➢ means for setting the minimum interest levels to be reached in the various subjects/topics for admission to the extension classes at each step of continuous evaluation;
➢ set of multiple-choice questions regarding all subjects/topics for the objective evaluation of *in itinere* learning by means of intermediate exams;
➢ means for random identification of multiple-choice questions, in a preset percentage of those in the set of intermediate exams, for giving the final exam;
➢ at least one computer;
➢ at least one video projector for computers;
➢ at least one audio amplification system for computers;
➢ electronic grading system equipped with keyboards, USB receiver and software; and
➢ application software for the programmed management of data and reports in the various phases of the course.
